# FASCICULE DE BREVET EUROPEEN

(11) **EP 2 804 775 B1**
(45) Date de publication et mention de la délivrance du brevet: **30.03.2016**
(21) Numéro de dépôt: 12816056.1
(22) Date de dépôt: 21.12.2012
(51) Int. Cl.: B60H 1/00

(54) **DISPOSITIF ÉTANCHE POUR SYSTÈME D'AIR CONDITIONNE**
LUFTDICHTE VORRICHTUNG FÜR KLIMAANLAGE
AIR-TIGHT ARRANGEMENT FOR AN AIR CONDITIONING SYSTEM

(30) Priorité: 19.01.2012 FR 1250521
(43) Date de publication de la demande: 26.11.2014
(73) Titulaire: MAHLE International GmbH, 70376 Stuttgart (DE)
(72) Inventeur: PIHET, David, 54560 Beuvillers (FR)
(74) Mandataire: BRP Renaud & Partner mbB Rechtsanwälte Patentanwälte Steuerberater
(86) Numéro de dépôt international: PCT/EP2012/076700
(87) Numéro de publication internationale: WO 2013/107601

(56) Documents cités:
- DE-A1- 10 340 041
- DE-U1- 29 911 505
- FR-A1- 2 849 806
- FR-A1- 2 907 092

## Description

### DOMAINE TECHNIQUE

L'invention est relative à système d'air conditionné dans lequel un échangeur thermique est traversé par un flux d'air circulant dans un conduit, un moyen d'étanchéité étant placé dans l'espace entre l'échangeur et le conduit.

### ARRIERE-PLAN TECHNOLOGIQUE DE L'INVENTION

Le document FR 2 849 806 A1, qui est considéré comme l'art antérieur le plus proche, divulgue un dispositif d'étanchéité destiné à obturer l'espace périphérique situé entre un échangeur thermique et un conduit de système de ventilation et d'air conditionné de véhicule. Les systèmes d'air conditionné comprennent des conduits de circulation d'air et des échangeurs thermiques. Les échangeurs, généralement parallélépipédiques, sont agencés dans un des conduits et sont traversés par un flux d'air. L'échangeur étant légèrement plus petit que le conduit dans lequel il est placé, un espace autour de l'échangeur existe et doit impérativement être bouché de manière étanche et ce dans le but de forcer le flux d'air à intégralement traverser l'échangeur sans pouvoir le contourner. De plus, des vibrations se propageant par la structure peuvent faire vibrer le conduit et cela pourrait détériorer l'échangeur dont les pièces sont jointes par brasage si l'échangeur vibrait à son tour. Symétriquement, des vibrations peuvent naître du fait du flux d'air continu traversant l'échangeur thermique et celles-ci peuvent tout autant détériorer des pièces ou bien être désagréablement ressenties. Ainsi en sus de l'étanchéité il est important d'empêcher la transmission des vibrations entre l'échangeur et le conduit.

Dans ce double but d'étanchéité et d'isolation il est connu de coller des rubans de mousse autour de l'échangeur, la mousse se trouvant après montage comprimée dans l'espace entourant l'échangeur. La mousse assure à elle seule la double fonction d'étanchéité et d'isolation des vibrations. Cette solution largement répandue présente plusieurs inconvénients. Il est d'abord connu que la mise en place de la mousse adhésive est une opération manuelle longue et sujette à erreurs. Ensuite, la mousse comprimée en permanence perd de son élasticité et au fur et à mesure de la vie du système l'étanchéité et l'isolation se détériorent. De plus, la mousse peut être le nid de développement de bactéries dont la présence engendre des odeurs désagréables. Il est donc important de proposer un système alternatif simple qui résolve ces difficultés.

### RESUME DE L'INVENTION

La présente invention résous les problèmes ci-dessus mentionnés en proposant un dispositif d'étanchéité et d'isolation vibratoire destiné à obturer l'espace entre un échangeur thermique et un conduit de système de ventilation et d'air conditionné d'un véhicule. Un flux d'air circule dans le conduit selon une direction longitudinale et traverse l'échangeur de sa face amont à sa face aval. Le dispositif d'étanchéité comprend un cadre formé mince fermé de sorte à avoir une face externe en regard du conduit et une face interne en regard de l'échangeur, les deux faces, s'étendant d'un bord amont à un bord aval, le cadre en place étant apte à être à distance intermédiaire de l'échangeur et du conduit. Le dispositif comprend de plus un joint interne apte à obturer l'espace interne situé entre le cadre et l'échangeur, un joint externe apte à obturer l'espace externe situé entre le cadre et le conduit, des plots antivibratoires internes s'étendant depuis la face interne du cadre de sorte à pouvoir être en contact avec l'échangeur thermique et des plots antivibratoires externes s'étendant depuis la face externe du cadre de sorte à pouvoir être en contact avec le conduit de circulation d'air. Les plots internes et externes isolant ensemble du point de vu vibratoire le conduit de l'échangeur. Les joints interne et externe et les plots internes et externes sont avantageusement solidaires du cadre de sorte à former un ensemble intégré facilement manipulable. Par ailleurs, le cadre comprend une butée s'étendant en direction interne à partir du bord aval du cadre de sorte que le dispositif étant mis en place autour de l'échangeur, la butée soit en contact contre la face aval de l'échangeur assurant par la même le positionnement correcte du dispositif relativement à l'échangeur.

De plus, le joint interne est un joint à lèvre s'étendant depuis le bord amont du cadre de sorte que le dispositif mis en place autour de l'échangeur, le joint interne vienne en contact continu contre la périphérie de la face amont de l'échangeur et obture ainsi tout l'espace interne. Egalement, le joint externe est un joint à lèvre s'étendant depuis le bord amont du cadre de sorte que le dispositif mis en place autour de l'échangeur et dans le conduit, le joint externe vienne en contact continu contre les parois du conduit et obture ainsi l'espace externe. Les joints et plots internes et externes sont en élastomères avantageusement surmoulés sur le cadre de sorte à assurer une réalisation aisée du dispositif intégré. Ainsi réalisé le dispositif assure indépendamment les fonctions d'étanchéité et d'isolation vibratoire ce qui permet de fortement simplifier les opérations d'assemblage. Par ailleurs, le dispositif proposé est peu sensible aux variations de dimensions d'une pièce à l'autre, variations dues aux tolérances dimensionnelles de fabrication et donc, les fonctions d'étanchéité et d'isolation vibratoire sont mieux assurées que précédemment. Enfin, le surmoulage des joints et plots en matériaux hydrofuges ainsi que le profil choisi pour ces éléments assure que, dans le cas d'un échangeur de type évaporateur, les eaux de condensat ne sont pas retenues et peuvent être évacuées.

L'invention concerne également un système d'air conditionné pour véhicule comprenant un conduit de circulation d'un flux d'air, un échangeur thermique agencé dans le conduit et apte à être traversé par un flux d'air circulant dans le conduit et un dispositif d'étanchéité réalisé selon les paragraphes précédents et agencé entre le conduit et l'échangeur.

L'invention concerne de plus un procédé pour assurer l'étanchéité et l'isolation vibratoire entre un conduit d'air et un échangeur thermique d'un système d'air conditionné d'un véhicule, le procédé comprenant les étapes suivantes :
- pourvoir un dispositif d'étanchéité réalisé selon la description précédente ;
- agencer ledit dispositif autour de l'échangeur thermique,
- agencer l'ensemble échangeur et dispositif dans le conduit de circulation du fluide.

### DESCRIPTION DES FIGURES

Un mode de réalisation de l'invention est maintenant décrit par l'intermédiaire des figures suivantes.
La Figure 1 est une vue éclatée en perspective d'une partie d'un système d'air conditionné de véhicule notamment un conduit d'air, l'échangeur thermique et le dispositif d'étanchéité selon l'invention.
La Figure 2 est une vue en perspective similaire à la Figure 1, les éléments étant assemblés.
La Figure 3 est une coupe transversale du dispositif d'étanchéité de la Figure 1.
La Figure 4 est une vue isométrique du dispositif selon l'invention.
La Figure 5 est un détail en coupe d'un plot antivibratoire du dispositif des Figures 1, 2, 3 et 4.

### DESCRIPTION DES MODES DE REALISATION PRÉFÉRÉS

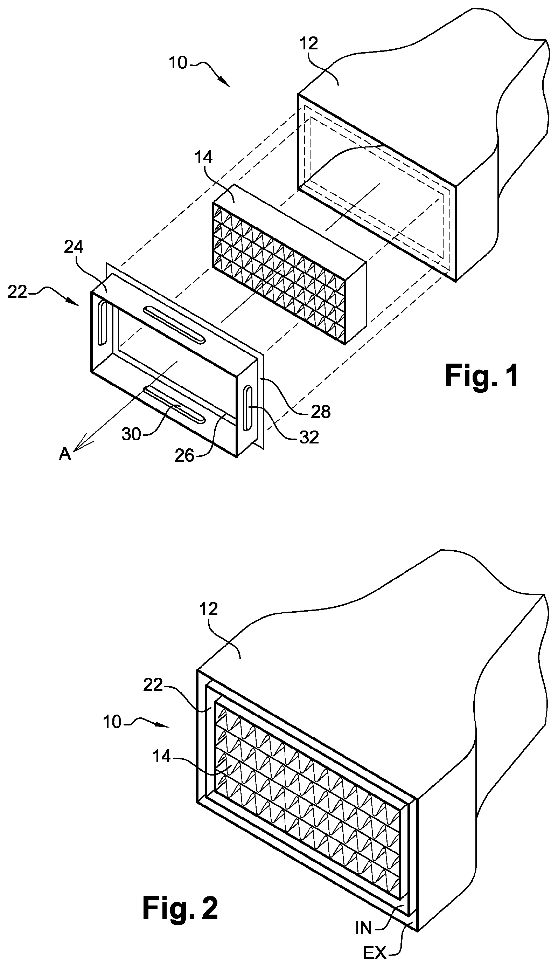

La Figure 1 représente une partie d'un système d'air conditionné 10 et plus particulièrement la sortie d'un conduit d'air 12, un échangeur thermique 14 et un dispositif d'étanchéité 22. Le conduit de circulation 22 est conçu pour recevoir l'échangeur 14 parallélépipédique rectangle et a donc localement une section rectangulaire complémentaire. Le flux d'air circule selon un axe longitudinal A perpendiculaire à ladite section rectangulaire, et donc également à l'échangeur thermique 14. La description s'appuie sur un système parallélépipédique mais l'invention est applicable sans difficultés à d'autres géométries d'échangeurs thermiques. Le conduit 12 ici représenté est réalisé par moulage en matière plastique mais pourrait tout aussi bien être réalisé en un autre matériau tel que de l'acier. L'échangeur 14 quant à lui est de conception classique. Il a une forme générale en parallélépipède rectangle avec une face amont 16 et une face aval 18 perpendiculaires au sens du flux, le pourtour 20 de l'échangeur 14 comprenant quatre faces longitudinales périphériques. Par ailleurs l'échangeur 14 comprend deux réservoirs de fluide parallèles, transversalement reliés par des tubes entre lesquels sont brasées de fines ailettes corruguées. Un des réservoirs est pourvu d'une entrée et d'une sortie du fluide, des séparations internes obligeant le fluide à circuler d'un réservoir à l'autre au travers des tubes transversaux. Sur la Figure 1 est également représenté le dispositif d'étanchéité 22 ayant la forme d'un cadre rectangulaire apte à être inséré entre l'échangeur thermique 14 et le conduit 12 de circulation d'air. L'objectif de ce dispositif étant de prévenir un passage du flux d'air par la périphérie de l'échangeur.

La Figure 2 représente l'ensemble monté, le dispositif d'étanchéité 22 étant agencé sur l'échangeur 14 et l'ensemble étant positionné à l'intérieur du conduit 12.

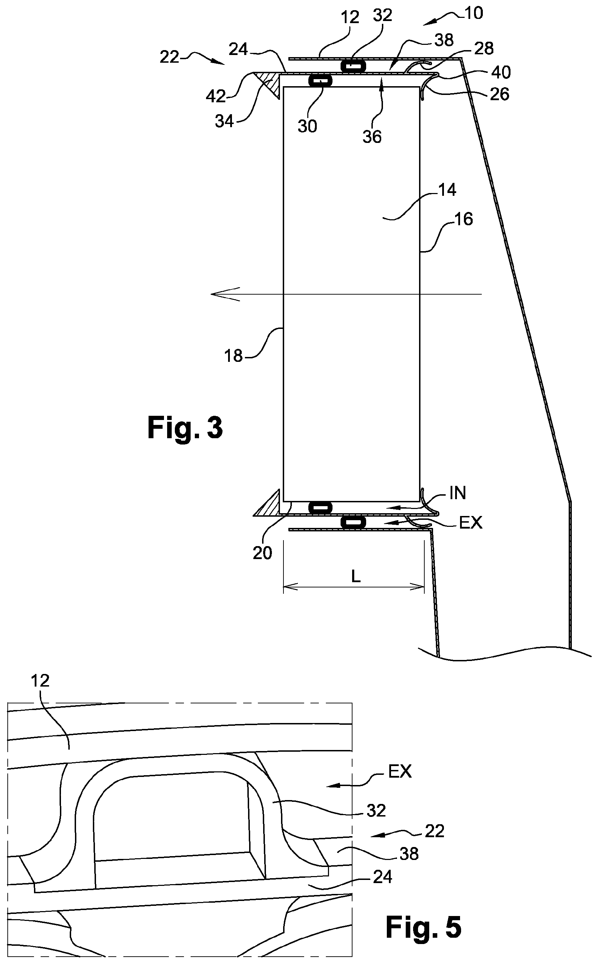

La Figure 3 est une section, selon un plan longitudinal, de l'ensemble monté. Le dispositif d'étanchéité 22 comprend un cadre 24 équipé d'un joint à lèvre interne 26, d'un joint à lèvre externe 28, de plots antivibratoires internes 30, de plots antivibratoires externes 32 ainsi que d'une butée 34.

Le cadre 24 en lui-même est réalisé fermé et relativement mince et sensiblement de même largeur que l'échangeur thermique 14, largeur mesurée entre les faces amont 16 et aval 18 de l'échangeur 14. Le cadre 24 présente alors une face interne 36 opposée à une face externe 38, les deux faces, 36, 38 s'étendant d'un bord amont 40 à un bord aval 42 du cadre. Ainsi réalisé, le cadre 24 peut se loger entre l'échangeur 14 et le conduit 12, sans toucher aucun des deux éléments. L'espace séparant l'échangeur 14 du conduit 12 de circulation d'air est alors divisé entre un espace interne IN compris entre la face interne 36 du cadre et le pourtour 20 de l'échangeur et un espace externe EX situé entre la face externe 38 du cadre et le conduit de circulation 12.

Au niveau du bord aval 42, le cadre 24 est pourvu de la butée 34 interne qui facilite la mise en place et le maintien du dispositif d'étanchéité 22, l'opérateur de montage enfilant le dispositif 22 sur l'échangeur 14 jusqu'à sentir le contact de la butée 34 contre la face aval 18 de l'échangeur. Notons que le cadre 24 du dispositif peut être pourvu de plusieurs butées par exemple une sur chacune des faces.

Le joint à lèvre interne 26 s'étend tout autour du cadre 24 et sans interruption. Il s'étend à partir du bord amont 40 du cadre, ou bien à partir de la face interne 36 mais à proximité du bord amont 40. Ainsi, tel que représenté sur la Figure 3 lorsque le cadre 24 est en place et la butée 34 en contact le joint interne 26 se met naturellement en place pour venir en contact contre la face amont 16 de l'échangeur 14 et ainsi étanchéifier l'espace interne IN. Grâce au joint interne 26 et à la butée 34, le dispositif d'étanchéité 22 reste en place autour de l'échangeur 14 et est retenu, légèrement coincé entre la butée 34 et le joint interne 26.

Le joint à lèvre externe 28 s'étend quant à lui en direction opposée au joint interne 26, depuis la face externe 38 du cadre et également sans interruption tout autour du cadre 24. Tel que représenté sur la Figure 3, en position montée le joint externe 28 est en contact circonférentiel continu avec la paroi du conduit 12 de circulation obturant ainsi de manière étanche l'espace externe EX. Dans l'exemple choisi sur la Figure 3 le dispositif est d'abord mis en place autour de l'échangeur 14 puis, l'ensemble est inséré dans le conduit 12 de circulation.

Par ailleurs le cadre 24 du dispositif est équipé de plots antivibratoires internes 30 et externes 32 spécialement destinés à l'isolation acoustique de l'échangeur 14 vis-à-vis du conduit 12. Les plots internes 30 s'étendent à partir de la face interne 36 du cadre jusqu'à leur sommet qui vient en contact contre le pourtour 20 de l'échangeur. Symétriquement, les plots externes 32 s'étendent depuis la face externe 38 du cadre jusqu'à leur sommet qui vient en contact contre la paroi du conduit 12 de circulation. Des plots internes 30 et externes 32 sont présents sur les quatre faces du cadre 24 et ce dans le but d'assurer une isolation vibratoire dans toutes les directions transversales.

Un mode de réalisation consiste à mouler le cadre 24 en une matière plastique permettant une légère souplesse de sorte à faciliter la mise en place, mais restant suffisamment rigide pour conserver naturellement sa forme rectangulaire. Les joints internes 26 et externes 28, et les plots antivibratoires internes 30 et externes 32 sont quant à eux surmoulés sur le cadre 24 de sorte à former un dispositif intégré facilement fabricable et manipulable et apte à remplir efficacement les fonctions d'étanchéité et d'isolation acoustique.

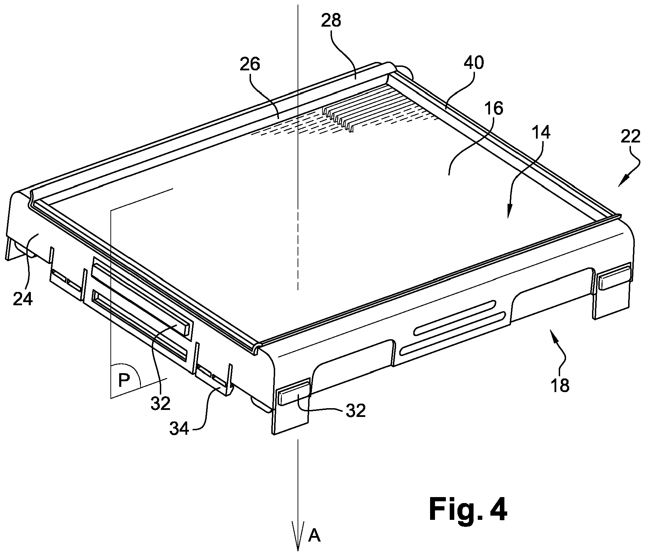

La Figure 4 représente le dispositif d'étanchéité 22 mis en place sur l'échangeur thermique 14, dont est clairement visible la face amont 16, et le joint interne 26 bouche entièrement l'espace interne IN. Dans cette représentation le cadre 24 est équipé de plots antivibratoires externes 32 qui sont agencés différemment selon les faces du cadre. Ainsi, une première face visible, à gauche sur la Figure 4, est équipée d'un seul plot 32 allongé et centré, alors qu'une seconde face visible, à droite sur la Figure 4, est pourvue de deux plots 32 courts agencés aux extrémités de la face du cadre.

La Figure 5 représente de manière plus détaillée un plot antivibratoire externe 32, surmoulé sur le cadre 24. Selon un plan de coupe P longitudinal, identifié sur la Figure 4, le plot a la forme d'un dôme creux d'épaisseur sensiblement constante. En fait, comme cela est visible sur les Figures 1 et 4, le plot 32 est allongé selon un axe transversal perpendiculaire au plan de coupe P de sorte à être en contact long contre la paroi du conduit 12. Par ailleurs, également visible sur la Figure 5, le plot antivibratoire 32 est surmoulé sur le cadre 24 en un emplacement du cadre prévu à cet effet, l'emplacement étant en léger creux par rapport à la face externe 38. Les plots antivibratoires internes 30 sont conçus selon le même principe. Ainsi réalisé, les plots surmoulés sont solidaires du cadre 34 d'une part grâce à l'adhérence même des matériaux mais également grâce au maintien en place mécanique pourvu par l'emplacement en léger creux.

Les plots antivibratoires internes aident au positionnement du dispositif d'étanchéité autour de l'échangeur et les plots antivibratoires externes aident au positionnement de l'échangeur thermique équipé du dispositif d'étanchéité à l'intérieur du conduit d'air. Les variations dimensionnelles inhérentes à la fabrication des échangeurs de même modèle sont avantageusement absorbées par les plots antivibratoires qui peuvent se déformer facilement et rester comprimé de sorte à assurer une excellente tenue en place de l'ensemble.

Grâce au découplage des fonctions d'étanchéité et d'isolation acoustique, la mise au point fine de l'isolation acoustique est facilitée car indépendante de la fonction étanchéité.

Une alternative complémentaire à la description ci-dessus est de réaliser un dispositif d'étanchéité qui s'insère et se met en place dans le conduit 12 avant que l'échangeur 14 ne soit mis en place dans le dispositif. Dans ce cas la butée s'étendrait en direction externe pour venir en contact de bords du conduit. De même un cadre peut être pourvu d'une butée externe pour positionner le dispositif dans le conduit et d'une butée interne pour positionner l'échangeur dans le dispositif.

## Revendications

1. Dispositif (22) d'étanchéité et d'isolation vibratoire destiné à obturer l'espace périphérique situé entre un échangeur thermique (14) et un conduit (12) de système de ventilation et d'air conditionné (10) de véhicule, un flux d'air circulant dans le conduit (12) selon une direction longitudinale (A) et traversant l'échangeur (14) de sa face amont (16) à sa face aval (18), **caractérisé en ce que** le dispositif d'étanchéité (22) comprend
- un cadre (24) mince fermé de sorte à avoir une face externe (38) en regard du conduit (12) et une face interne (36) en regard de l'échangeur (14), les deux faces (36, 38) s'étendant d'un bord amont (40) à un bord aval (42), le cadre (24) en place étant apte à être logé dans ledit espace périphérique à distance intermédiaire de l'échangeur (14) et du conduit (12) ;
- un joint interne (26) apte à obturer l'espace interne (IN) situé entre le cadre (24) et l'échangeur (14) ;
- un joint externe (28) apte à obturer l'espace externe (EX) situé entre le cadre (24) et le conduit (12) ;
- des plots antivibratoire internes (30) s'étendant depuis la face interne (36) du cadre (24) de sorte à pouvoir être en contact avec l'échangeur thermique (14);
- des plots antivibratoires externes (32) s'étendant depuis la face externe (38) du cadre (24) de sorte à pouvoir être en contact avec le conduit (12) de circulation d'air ;
les joints interne (26) et externe (28) et les plots internes (30) et externes (32) étant solidaires du cadre (24).

2. Dispositif (22) d'étanchéité selon la revendication 1 dans lequel le cadre (24) comprend de plus une butée (34) s'étendant à partir du bord aval (40) du cadre de sorte que la butée (34) soit apte à être en contact contre la face aval (18) de l'échangeur (14) assurant par la même le positionnement longitudinal correct du dispositif (22) relativement à l'échangeur (14) lorsque le dispositif est mis en place autour de l'échangeur (14).

3. Dispositif d'étanchéité (22) selon une quelconque des revendications précédentes dans lequel le joint interne (26) est un joint à lèvre s'étendant depuis le bord amont (40) du cadre de sorte que le joint interne (26) soit apte à venir en contact continu contre la périphérie de la face amont (16) de l'échangeur (14) et obture ainsi tout l'espace interne (IN) lorsque le dispositif est mis en place autour de l'échangeur (14).

4. Dispositif d'étanchéité (22) selon une quelconque des revendications précédentes dans lequel le joint externe (28) est un joint à lèvre (28) s'étendant depuis le bord amont (40) du cadre de sorte que le joint externe (28) soit apte à venir en contact continu contre les parois du conduit (12) et obture ainsi l'espace externe (EX) lorsque le dispositif (22) est mis en place autour de l'échangeur (14) et dans le conduit (12).

5. Dispositif (22) selon une quelconque des revendications précédentes dans lequel les joints et plots internes et externes (26, 28, 30, 32) sont surmoulés sur le cadre (24).

6. Dispositif (22) selon une quelconque des revendications précédentes dans lequel les joints et plots internes et externes (26, 28, 30, 32) sont réalisés en élastomère hydrofuge.

7. Système d'air conditionné (10) pour véhicule comprenant un conduit (12) de circulation d'un flux d'air, un échangeur thermique (14) agencé dans le conduit (12) et apte à être traversé par un flux d'air circulant dans le conduit, un dispositif d'étanchéité (22) étant agencé entre le conduit (12) et l'échangeur (14) de sorte que le flux d'air ne puisse contourner l'échangeur (14) **caractérisé en ce que** le dispositif (22) est réalisé selon une quelconque des revendications précédentes.

8. Procédé pour assurer l'étanchéité et l'isolation vibratoire entre un conduit (12) d'air et un échangeur thermique (14) d'un système d'air conditionné (10) d'un véhicule, le procédé comprenant les étapes suivantes :
- pourvoir un dispositif d'étanchéité (22) réalisé selon une des revendications 1 à 6 ;
- agencer ledit dispositif (22) autour de l'échangeur thermique (14),
- agencer l'ensemble échangeur (14) et dispositif (22) dans le conduit (12) de circulation du fluide.

## Patentansprüche

1. Abdicht- und Schwingungsisolationsvorrichtung (22), welche dazu bestimmt ist, den Umfangsraum zu verschließen, der sich zwischen einem Wärmetauscher (14) und einem Kanal (12) einer Lüftungs- und Klimaanlage (10) eines Fahrzeugs befindet, wobei ein Luftstrom in dem Kanal (12) entlang einer Längsrichtung (A) strömt und den Wärmetauscher (14) von der stromaufwärtigen Seite (16) zur stromabwärtigen Seite (18) durchquert, **dadurch gekennzeichnet, dass** die Abdichtvorrichtung (22) umfasst:
- einen geschlossenen dünnen Rahmen (24), der eine dem Kanal (12) zugewandte Außenseite (38) und eine dem Wärmetauscher (14) zugewandte Innenseite (36) aufweist, wobei sich die zwei Seiten (36, 38) von einem stromaufwärtigen Rand (40) zu einem stromabwärtigen Rand (42) erstrecken, wobei der angebrachte Rahmen (24) geeignet ist, in dem Umfangsraum in einem Zwischenabstand zwischen dem Wärmetauscher (14) und dem Kanal (12) aufgenommen zu werden;
- eine innere Dichtung (26), die geeignet ist, den inneren Raum (IN) zu verschließen, der sich zwischen dem Rahmen (24) und dem Wärmetauscher (14) befindet;
- eine äußere Dichtung (28), die geeignet ist, den äußeren Raum (EX) zu verschließen, der sich zwischen dem Rahmen (24) und dem Kanal (12) befindet;
- innere schwingungsdämpfende Elemente (30), die sich von der Innenseite (36) des Rahmens (24) aus erstrecken, derart, dass sie sich mit dem Wärmetauscher (14) in Kontakt befinden können;
- äußere schwingungsdämpfende Elemente (32), die sich von der Außenseite (38) des Rahmens (24) aus erstrecken, derart, dass sie sich mit dem Luftströmungskanal (12) in Kontakt befinden können;
wobei die innere (26) und die äußere (28) Dichtung und die inneren (30) und äußeren (32) schwingungsdämpfenden Elemente fest mit dem Rahmen (24) verbunden sind.

2. Abdichtvorrichtung (22) nach Anspruch 1, wobei der Rahmen (24) außerdem einen Anschlag (34) umfasst, der sich von dem stromabwärtigen Rand (40) des Rahmens aus erstreckt, derart, dass der Anschlag (34) geeignet ist, sich mit der stromabwärtigen Seite (18) des Wärmetauschers (14) in Kontakt zu befinden und dadurch die korrekte Positionierung der Vorrichtung (22) in Längsrichtung relativ zu dem Wärmetauscher (14) sicherzustellen, wenn die Vorrichtung um den Wärmetauscher (14) herum angebracht ist.

3. Abdichtvorrichtung (22) nach einem der vorhergehenden Ansprüche, wobei die innere Dichtung (26) eine Lippendichtung ist, die sich von dem stromaufwärtigen Rand (40) des Rahmens aus erstreckt, derart, dass die innere Dichtung (26) geeignet ist, mit dem Umfang der stromaufwärtigen Seite (16) des Wärmetauschers (14) in durchgehenden Kontakt zu kommen, und somit den gesamten inneren Raum (IN) verschließt, wenn die Vorrichtung um den Wärmetauscher (14) herum angebracht ist.

4. Abdichtvorrichtung (22) nach einem der vorhergehenden Ansprüche, wobei die äußere Dichtung (28) eine Lippendichtung (28) ist, die sich von dem stromaufwärtigen Rand (40) des Rahmens aus erstreckt, derart, dass die äußere Dichtung (28) geeignet ist, mit den Wänden des Kanals (12) in durchgehenden Kontakt zu kommen, und somit den äußeren Raum (EX) verschließt, wenn die Vorrichtung (22) um den Wärmetauscher (14) herum und in dem Kanal (12) angebracht ist.

5. Vorrichtung (22) nach einem der vorhergehenden Ansprüche, wobei die inneren und äußeren Dichtungen und Elemente (26, 28, 30, 32) an den Rahmen (24) angeformt sind.

6. Vorrichtung (22) nach einem der vorhergehenden Ansprüche, wobei die inneren und äußeren Dichtungen und Elemente (26, 28, 30, 32) aus Wasser abweisendem Elastomer hergestellt sind.

7. Klimaanlage (10) für ein Fahrzeug, welche einen Strömungskanal (12) für einen Luftstrom und einen Wärmetauscher (14), der in dem Kanal (12) angeordnet ist und geeignet ist, von einem in dem Kanal strömenden Luftstrom durchquert zu werden, umfasst, wobei eine Abdichtvorrichtung (22) zwischen dem Kanal (12) und dem Wärmetauscher (14) derart angeordnet ist, dass der Luftstrom den Wärmetauscher (14) nicht umgehen kann, **dadurch gekennzeichnet, dass** die Vorrichtung (22) nach einem der vorhergehenden Ansprüche ausgeführt ist.

8. Verfahren zum Sicherstellen der Dichtigkeit und Schwingungsisolation zwischen einem Luftkanal (12) und einem Wärmetauscher (14) einer Klimaanlage (10) eines Fahrzeugs, wobei das Verfahren die folgenden Schritte umfasst:
- Vorsehen einer Abdichtvorrichtung (22), die nach einem der Ansprüche 1 bis 6 ausgeführt ist;
- Anordnen der Vorrichtung (22) um den Wärmetauscher (14) herum;
- Anordnen der den Wärmetauscher (14) und die Vorrichtung (22) umfassenden Baugruppe in dem Fluidströmungskanal (12).

## Claims

1. A sealing and vibration damping device (22) intended to seal the peripheral space situated between a heat exchanger (14) and a duct (12) of the ventilation and air conditioning system (10) of a vehicle, a flow of air circulating in the duct (12) along a longitudinal direction (A) and passing through the exchanger (14) from its upstream face (16) to its downstream face (18), **characterized in that** the sealing device (22) includes
- a thin, closed frame (24) so as to have an external face (38) facing the duct (12) and an internal face (36) facing the exchanger (14), the two faces (36, 38) extending from an upstream edge (40) to a downstream edge (42), the frame (24) in place being suitable to be housed in said peripheral space at an intermediate distance from the exchanger (14) and from the duct (12);
- an inner seal (26) suitable for sealing the inner space (IN) situated between the frame (24) and the exchanger (14);
- an outer seal (28) suitable for sealing the outer space (EX) situated between the frame (24) and the duct (12);
- internal anti-vibratory pads (30) extending from the inner face (36) of the frame (24) so as to be able to be in contact with the heat exchanger (14);
- external anti-vibratory pads (32) extending from the outer face (38) of the frame (24) so as to be able to be in contact with the duct (12) for circulation of air;
the inner (26) and outer (28) seals and the internal (30) and external (32) pads being integral with the frame (24).

2. The sealing device (22) according to Claim 1, in which the frame (24) includes in addition a stop (34) extending from the downstream edge (40) of the frame such that the stop (34) is suitable for being in contact against the downstream face (18) of the exchanger (14), ensuring thereby the correct longitudinal positioning of the device (22) relative to the exchanger (14) when the device is put in place around the exchanger (14).

3. The sealing device (22) according to any one of the preceding claims, in which the inner seal (26) is a lip seal extending from the upstream edge (40) of the frame such that the inner seal (26) is suitable to come in continuous contact against the periphery of the upstream face (16) of the exchanger (14) and thus seals the entire inner space (IN) when the device is put in place around the exchanger (14).

4. The sealing device (22) according to any one of the preceding claims, in which the outer seal (28) is a lip seal (28) extending from the upstream edge (40) of the frame such that the outer seal (28) is suitable to come in continuous contact against the walls of the duct (12) and thus seals the outer space (EX) when the device (22) is put in place around the exchanger (14) and in the duct (12).

5. The device (22) according to any one of the preceding claims, in which the inner and outer seals and pads (26, 28, 30, 32) are overmoulded on the frame (24).

6. The device (22) according to any one of the preceding claims, in which the inner and outer seals and pads (26, 28, 30, 32) are made from water-repellent elastomer.

7. An air conditioning system (10) for a vehicle including a duct (12) for circulation of a flow of air, a heat exchanger (14) arranged in the duct (12) and suitable to be passed through by a flow of air circulating in the duct, a sealing device (22) being arranged between the duct (12) and the exchanger (14) such that the flow of air can not bypass the exchanger (14), **characterized in that** the device (22) is realized according to any one of the preceding claims.

8. A method for ensuring the sealing and vibration damping between an air duct (12) and a heat exchanger (14) of an air conditioning system (10) of a vehicle, the method including the following steps:
- providing a sealing device (22) realized according to one of Claims 1 to 6;
- arranging said device (22) around the heat exchanger (14),
- arranging the assembly of exchanger (14) and device (22) in the duct (12) for circulation of the fluid.
